# EUROPEAN PATENT APPLICATION

(11) **EP 1 613 007 A1**
(43) Date of publication of application: **04.01.2006**
(21) Application number: 05014075.5
(22) Date of filing: 29.06.2005
(51) Int. Cl.: H04L 12/56, H04B 7/26

(54) **Method for controlling the transmission rate of a reverse channel with restriction of the maintenance of the rate in case of congestion**

(30) Priority: 29.06.2004 KR 2004049775
(71) Applicant: LG Electronics, Inc., Seoul (KR)
(72) Inventor: Choi, Young-Jin, Gwangmyeong Gyeonggi-Do (KR)
(74) Representative: von Hellfeld, Axel

(57) **Abstract**

The present invention is related to controlling a transmission rate of a reverse traffic channel of an HDR system in a wireless communication system. The present invention checks a congested state of a reverse channel (S410), generates a random number if the reverse channel is in the congested state (S426), compares the random number with a transition probability (S428), counts the number of times the random number is greater than the transition probability (S434), compares the count value with a predetermined threshold value (S436), and determines a transmission rate of a reverse traffic channel (S414,432). If a count value exceeds the predetermined threshold value, the transmission rate of the reverse traffic channel is decreased regardless of the random number so that users requiring the same type of service can be fairly provided with the service.

## Description

### FIELD OF THE INVENTION

The present invention relates to an HDR (High Data Rate) system, and particularly, to controlling a transmission rate of a reverse traffic channel of an HDR system in a wireless communication system.

### BACKGROUND OF THE INVENTION

With the provision of various kinds of information and services through the Internet, a high data rate (HDR) system has been introduced to provide high data rate wireless communication services to a user of a mobile communication service.

The HDR system is a type of third generation mobile communication system providing high-speed packet data services. The HDR system transmits data such as text messages, videos, music and the like through a network such as the Internet. Particularly, the HDR system has a data processing speed that is much higher than that of an existing wireless data system. Furthermore, the HDR system may be compatible with an existing data transmission device so that an existing system can be easily upgraded.

In general, users using the same kind of service in the HDR system should be provided with the same quality of service. Accordingly, data of a reverse channel (terminal → base station) of the HDR system undergoes coherent demodulation using a reverse pilot signal. A transmission rate of the reverse channel is variably controlled per each terminal within a range of 9.5 Kbps~153.6 Kbps by using data traffic and different characteristics of channel environments.

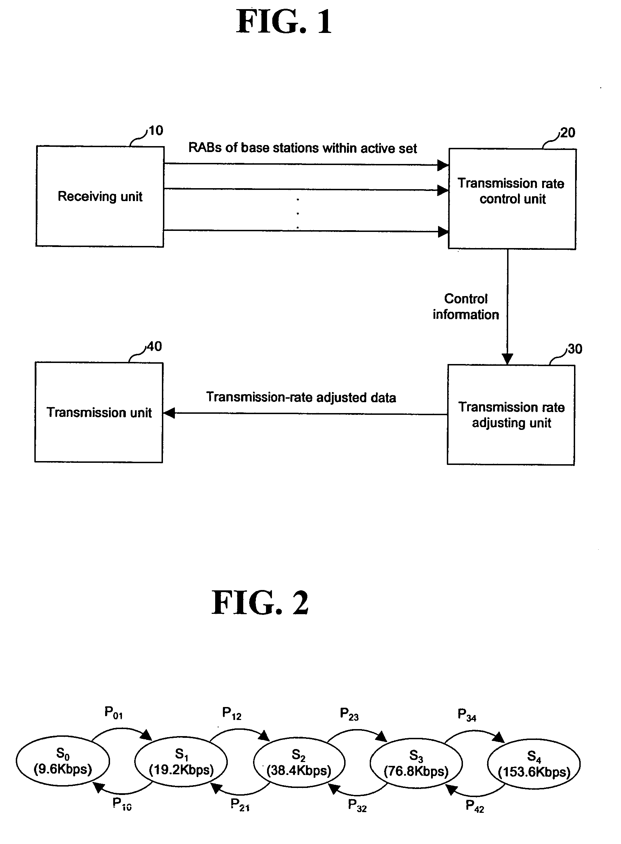

Figure 1 is a block diagram for controlling a transmission rate of a reverse traffic channel in a mobile communication terminal in accordance with the related art. As shown, the mobile communication terminal in accordance with the related art comprises a receiving unit 10 for receiving, from all base stations in an active set, an RAB (Reverse Activity Bit) indicating whether a reverse traffic channel is congested, a transmission rate control unit 20 for determining a transmission rate of a reverse channel upon receiving the RAB from the receiving unit 10, a transmission rate adjusting unit 30 for adjusting a transmission rate of data according to control information received from the transmission rate control unit 20; and a transmitting unit 40 for transmitting, to a base station, data which has been adjusted by the transmission rate adjusting unit 30.

Figure 2 is a state transition diagram showing five kinds of transmission rates (9.6 Kbps, 19.2 Kbps, 38.4 Kbps, 76.8 Kbps and 153.6 Kbps) of a reverse traffic channel. On the assumption that each transmission rate of the reverse traffic channel is a state indicating a transmission rate of a mobile communication terminal, a reverse transmission rate of the mobile communication terminal may be controlled as shown in the state transition diagram of Figure 2. The state of the terminal can only be transited from a predetermined state (S0, S1, S2, S3 or S4) to a neighboring state.

Accordingly, when RABs are received through the receiving unit 10 from all base stations of an active set, the transmission rate control unit 20 determines a transmission rate (state transition) based upon the received RAB value and a transition probability (P). The transmission rate control unit 20 then outputs a control signal corresponding to the determined rate to the transmission rate adjusting unit 30. The transition probability (P) is a value determined by each state, and is determined ultimately to control a transmission rate. For example, Pᵢⱼ denotes a probability that a state of the terminal is transited from state i to state j.

Accordingly, the transmission rate adjusting unit 30 adjusts a transmission rate of data by the transmission rate of the control signal outputted from the transmission rate control unit 20, and then transmits the data to a base station through the transmitting unit 40.

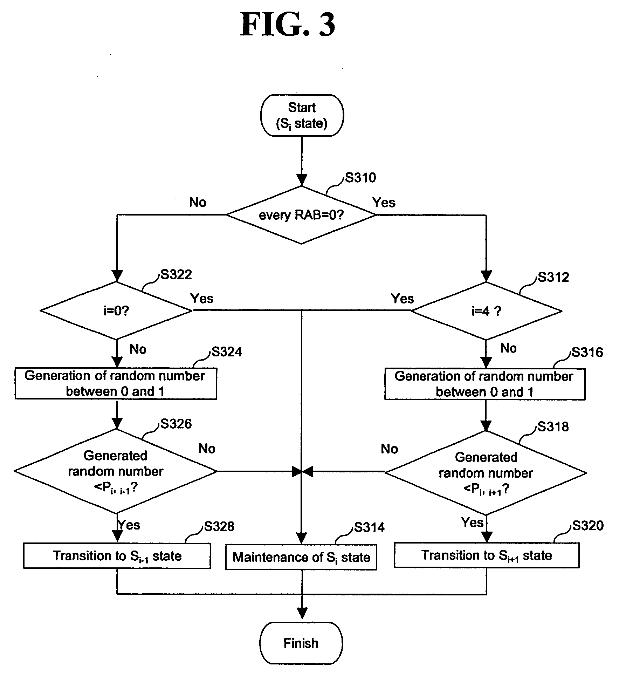

A method for controlling a transmission rate of a reverse traffic channel by the transmission rate control unit 20 will now be described in detail. Figure 3 is a flow chart showing a method for controlling a transmission rate of a reverse traffic channel in a HDR system in accordance with the related art.

As shown in Figure 3, when a plurality of RABs are received from the receiving unit 10, the transmission rate control unit 20 determines the state transition based on the received RABs and the transition probability (P). Namely, assuming that a reverse transmission rate of a current mobile communication terminal corresponds to state i, the transmission rate control unit 20 determines whether every received RAB is zero (S310).

If it is determined that every corresponding RAB is zero, then a current reverse channel has capacity. Thus, the transmission rate control unit 20 checks whether the reverse transmission rate, namely, a state of the terminal is S₄ (S312). If the terminal is in the state of S₄, the current state S₄ is maintained since there is no need to lower the reverse transmission rate (S314). If the terminal is not in the state of S₄, a random number between "0" and "1" is generated and then the terminal compares the corresponding random number to a next transition probability (P_{i, i+1}) (S316, S318). If the random number is equal to or greater than the transition probability (P_{i, i+1}), the current state Sᵢ is maintained (S314), and if the generated random number is smaller than the transition probability (P_{i, i+1}), a state of the terminal is transited to a next state of Sᵢ₊₁ (S320).

In contrast, if at least one of the received RABs is not zero, then the current reverse channel is congested. Thus, the transmission rate control unit 20 checks whether the reverse transmission rate, namely, a state of the terminal is S₀ (S322). If the reverse transmission rate is S₀, then the current state of S₀ is maintained (S314). If the state of the terminal is not S₀, then a random number between "0" and "1" is generated, and the corresponding random number is compared to a transition probability (P_{i, i-1}) (S324, S326). If the random number is equal to or greater than the transition probability (P_{i, i-1}), the current state Sᵢ is maintained (S314). If the random number is smaller than the transition probability (P_{i, i-1}), a state of the terminal is transited to a previous state of Sᵢ₋₁ (S328).

Figure 3 is a flow chart illustrating a situation when packets are consecutively transmitted. When the packet transmission is temporarily stopped and then performed again, the terminal starts transmitting packets in the state of S₀, namely, at the lowest transmission rate. Also, since each mobile communication terminal has a maximum transmission rate value transmitted from the base station, the terminal cannot transmit at a transmission rate greater than the maximum value (limit value). Preferably, the maximum transmission rate value is included in a limit value message of a transmission rate of the reverse traffic channel and then transmitted.

In general, users using the same kind of data service should be provided with the same quality of service. However, the method for controlling the reverse transmission rate of the HDR system in accordance with the related art is limited in providing fairness to users using the same kind of data service.

For example, if there are two terminals using the same data service for one base station and a current network is congested, each terminal controls a transmission rate of the reverse traffic channel according to the flow chart shown in Figure 3. Specifically, the transmission rate control unit 20 determines whether to decrease a transmission rate or to maintain a current state according to a random number generated from each terminal.

However, if the random numbers generated from one of the two mobile communication terminals are continuously smaller than a transition probability, and the random numbers generated from the other terminal are continuously greater than the transition probability, the former terminal continuously decreases a transmission rate and the latter terminal maintains a current transmission rate. For this reason, fairness in providing users with the same quality of service cannot be achieved due to different transmission rates.

### SUMMARY OF THE INVENTION

The present invention is directed to controlling a transmission rate of a reverse traffic channel of an HDR system in a wireless communication system.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a method for controlling a transmission rate of a reverse traffic channel in a wireless communication system, the method comprising determining whether a reverse traffic channel is congested, generating a random number if the reverse traffic channel is congested, comparing the random number to a transition probability, setting a count value according to the comparison between the random number and the transition probability, and comparing the count value to a threshold value if the random number is equal to or greater than the transition probability and setting a transmission rate of the reverse traffic channel according to the comparison between the count value and the threshold value.

The random number is generated if the transmission rate is not a lowest possible rate. The count value is reset if the reverse traffic channel is not congested.

In one aspect of the present invention, the method further comprises decreasing the transmission rate of the reverse traffic channel if the random number is less than the transition probability. Preferably, the count value is reset prior to decreasing the transmission rate of the reverse traffic channel. Also, the method may further comprise decreasing the transmission rate of the reverse traffic channel if the count value is equal to or greater than the threshold value. Moreover, the method may further comprise maintaining a current transmission rate if the count value is less than the threshold value.

Preferably, a congestion control bit received from base stations in active set is used to determine whether a reverse traffic channel is congested. The threshold value is set differently according to a type of service.

In another aspect of the present invention, the method further comprises counting the number of times the random number is consecutively equal to or greater than the transition probability, wherein the number of times the random number is consecutively equal to or greater than the transition probability indicates the number of times a current transmission rate is maintained. Also, the transition probability indicates a probability of transition from a current state to a previous state.

In another embodiment of the present invention, a method for controlling a transmission rate of a reverse traffic channel in a wireless communication system comprises determining that a reverse traffic channel is congested, generating a random number if the reverse traffic channel is congested, comparing the random number to a transition probability, and decreasing the transmission rate of the reverse traffic channel when the random number is consecutively equal to or greater than the transition probability more than a predetermined number of times.

The random number is generated if the transmission rate is not a lowest possible rate. A count value is reset if the reverse traffic channel is not congested. Furthermore, a count value is reset prior to decreasing the transmission rate of the reverse traffic channel.

In one aspect of the present invention, the method further comprises counting the number of times the random number is consecutively equal to or greater than the transition probability, wherein the number of times the random number is consecutively equal to or greater than the transition probability indicates the number of times a current transmission rate is maintained.

In another aspect of the present invention, the method further comprises maintaining a current transmission rate if the number of times the random number is consecutively equal to or greater than the transition probability is smaller than a threshold value, wherein the threshold value is set differently according to a type of service.

Preferably, the method further comprises decreasing the transmission rate of the reverse traffic channel if the random number is less than the transition probability, wherein a count value is reset prior to decreasing the transmission rate of the reverse traffic channel. The transition probability indicates a probability of transition from a current state to a previous state. Furthermore, a congestion control bit received from base stations in an active set is used to determine whether a reverse traffic channel is congested.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Figure 1 is a related art block diagram illustrating a method for controlling a transmission rate of a reverse traffic channel in a mobile communication terminal.

Figure 2 is a related art state transition diagram illustrating a transmission rate change of the reverse traffic channel in the mobile communication terminal

Figure 3 is a related art flow chart illustrating a method for controlling a transmission rate of the reverse traffic channel in an HDR system.

Figure 4 is a flow chart illustrating a method for controlling a transmission rate of a reverse traffic channel of an HDR system in accordance with an embodiment of the present invention.

### DETAILED DESCRIPTION OF THE PREFERRED EMBODIMENTS

The present invention relates to controlling a transmission rate of a reverse traffic channel of an HDR system in a wireless communication system.

Reference will now be made in detail to the preferred embodiments of the present invention, examples of which are illustrated in the accompanying drawings. A basic concept of the present invention is that users requiring the same type of data service are respectively provided with their service in a fair, impartial and reasonable manner. This is done by forcibly decreasing a reverse transmission rate regardless of a generated random number when a state that a current transmission rate of a mobile communication terminal is maintained is repeated more than a certain number of times. Accordingly, the present invention determines (controls) a transmission rate of the reverse traffic channel by setting a count variable and a threshold value (C_{TH}).

Preferably, the count variable is the number of situations in which a channel-congested state (i.e., when at least one of the RABs received from base stations in an active set is not zero) is not transited but is continuously maintained.

A method for controlling a transmission rate of the reverse traffic channel in accordance with the present invention may be applied to a block diagram of a mobile communication terminal shown in Figure 1.

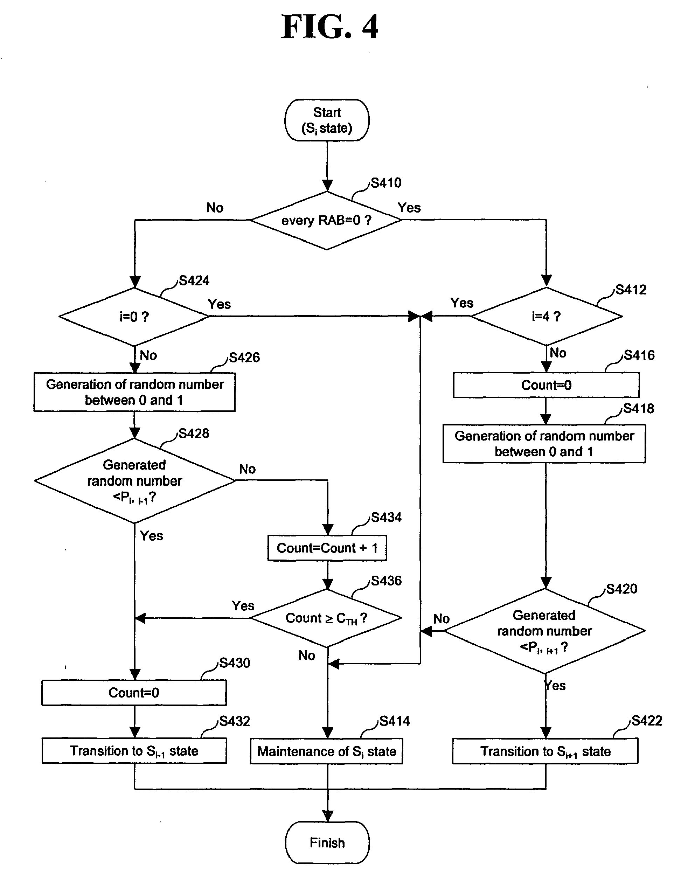

The method for controlling a transmission rate of the reverse traffic channel in accordance with an embodiment of the present invention will now be described with reference to Figure 4. In the present invention, as shown in Figure 2, it is preferable that each transmission rate of each reverse traffic channel (9.6 Kbps, 19.2 Kbps, 38.4 Kbps, 76.8 Kbps and 153.6 Kbps) is a state showing a transmission rate of the mobile communication terminal, and a transmission rate of a current reverse traffic channel is in a state Sᵢ.

In such a state, when Reverse Activity Bits (RABs) received from all base stations in the active set through a receiving unit 10 are inputted, a transmission rate control unit 20 determines whether every received RAB is zero (S410).

If every RAB is zero, then a reverse traffic channel has capacity. Thus, the transmission rate control unit 20 checks whether the transmission rate (state) of the current reverse traffic channel corresponds to S₄ (S412). If the state of the terminal is S₄, the current state S₄ is maintained because there is no need for the transmission rate control unit 20 to raise (increase) the reverse transmission rate (S414). In contrast, if the state of the terminal is not S₄, the transmission rate control unit 20 initializes a count value (S416), generates a random number between zero and one according to the RAB (S418), and compares the generated random number with a transition probability (P_{i, i+1}) (S420).

If the random number is equal to or greater than the transition probability (P_{i, i+1}), a current reverse transmission rate is maintained at the state of Sᵢ (S414). If the generated random number is smaller than the transition probability (P_{i, i+1}), the reverse transmission rate is increased to a state of Sᵢ₊₁ (S422).

In contrast, if at least one of the RABs is not zero, then the current reverse channel is in a congested state. Thus, the transmission rate control unit 20 preferably lowers the reverse transmission rate. Here, since the transmission rate of the reverse traffic channel cannot be lower than S₀, the transmission rate control unit 20 checks whether the reverse transmission rate corresponds to the state of S₀ (S424). If the state of the terminal is S₀, the current state S₀ is maintained (S414) because there is no need for the transmission rate control unit 20 to lower the reverse transmission rate. However, if the state of the terminal is not S₀, a random number between zero and one is generated (S426), and the generated random value is compared with a transition probability (P_{i, i-1}) (S428).

If the random value is smaller than the transition probability (P_{i, i-1}), a count value is initialized (S430) and the reverse transmission rate is decreased to Sᵢ₋₁ (S432). If the generated random value is equal to or greater than the transition probability (P_{i, i-1}), the count value is increased by one (S434) and the increased count value is compared to a preset threshold value (C_{TH}) (S436).

Preferably, the threshold value (C_{TH}) indicates the degree by which a state of channel congestion is not transited but maintained. Also, the threshold value (C_{TH}) can be set differently according to the type of service.

If the increased count value is smaller than the threshold value (C_{TH}), the transmission rate is maintained at the current state of Sᵢ (S414). If the increased count value is equal to or greater than a predetermined threshold value (C_{TH}) for more than a predetermined number of times, the count value is initialized (S430) and the reverse transmission rate is forcibly lowered by one level to be in the state of Sᵢ₋₁ (S432).

Accordingly, although the random numbers generated from two mobile communication terminals are different, a transmission rate of the reverse traffic is determined according to a comparison result between a threshold value (C_{TH}) and a count value which indicate a degree to which a current transmission state is maintained. Accordingly, the transmission rate control unit 20 can fairly maintain the transmission rate of the reverse traffic channel.

For reference, if the threshold value (C_{TH}) is set as an infinite value, the method for controlling a transmission rate of the reverse traffic channel in accordance with the present invention can operate in the same manner as that in accordance with the related art.

As so far described, the present invention is advantageous in that a service can be provided fairly to users requiring the same type of data service by using an algorithm that forcibly decreases a reverse transmission rate regardless of a random number generated in a mobile communication terminal when the reverse channel of the HDR system is congested.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method for controlling a transmission rate of a reverse traffic channel in a wireless communication system, the method comprising:
determining whether a reverse traffic channel is congested;
generating a random number if the reverse traffic channel is congested;
comparing the random number to a transition probability;
setting a count value according to the comparison between the random number and the transition probability; and
comparing the count value to a threshold value if the random number is equal to or greater than the transition probability and setting a transmission rate of the reverse traffic channel according to the comparison between the count value and the threshold value.

2. The method of claim 1, wherein the random number is generated if the transmission rate is not a lowest possible rate.

3. The method of claim 1, wherein the count value is reset if the reverse traffic channel is not congested.

4. The method of claim 1, further comprising decreasing the transmission rate of the reverse traffic channel if the random number is less than the transition probability.

5. The method of claim 4, wherein the count value is reset prior to decreasing the transmission rate of the reverse traffic channel.

6. The method of claim 1, further comprising decreasing the transmission rate of the reverse traffic channel if the count value is equal to or greater than the threshold value.

7. The method of claim 1, further comprising maintaining a current transmission rate if the count value is less than the threshold value.

8. The method of claim 1, wherein a congestion control bit received from base stations in an active set is used to determine whether a reverse traffic channel is congested.

9. The method of claim 1, wherein the threshold value is set differently according to a type of service.

10. The method of claim 1, further comprising counting the number of times the random number is consecutively equal to or greater than the transition probability.

11. The method of claim 10, wherein the number of times the random number is consecutively equal to or greater than the transition probability indicates the number of times a current transmission rate is maintained.

12. The method of claim 1, wherein the transition probability indicates a probability of transition from a current state to a previous state.

13. A method for controlling a transmission rate of a reverse traffic channel in a wireless communication system, the method comprising:
determining that a reverse traffic channel is congested;
generating a random number if the reverse traffic channel is congested;
comparing the random number to a transition probability; and
decreasing the transmission rate of the reverse traffic channel when the random number is consecutively equal to or greater than the transition probability more than a predetermined number of times.

14. The method of claim 13, wherein the random number is generated if the transmission rate is not a lowest possible rate.

15. The method of claim 13, wherein a count value is reset if the reverse traffic channel is not congested.

16. The method of claim 13, wherein a count value is reset prior to decreasing the transmission rate of the reverse traffic channel.

17. The method of claim 13, further comprising counting the number of times the random number is consecutively equal to or greater than the transition probability.

18. The method of claim 17, wherein the number of times the random number is consecutively equal to or greater than the transition probability indicates the number of times a current transmission rate is maintained.

19. The method of claim 17, further comprising maintaining a current transmission rate if the number of times the random number is consecutively equal to or greater than the transition probability is smaller than a threshold value.

20. The method of claim 19, wherein the threshold value is set differently according to a type of service.

21. The method of claim 13, further comprising decreasing the transmission rate of the reverse traffic channel if the random number is less than the transition probability.

22. The method of claim 21, wherein a count value is reset prior to decreasing the transmission rate of the reverse traffic channel.

23. The method of claim 13, wherein the transition probability indicates a probability of transition from a current state to a previous state.

24. The method of claim 13, wherein a congestion control bit received from base stations in an active set is used to determine whether a reverse traffic channel is congested.
